Europäisches Patentamt

European Patent Office

Office européen des brevets

(11) Publication number: **0 418 533 B1**

(12) **EUROPEAN PATENT SPECIFICATION**

(45) Date of publication of patent specification: **11.10.95**   (51) Int. Cl.6: **C08G 65/30**

(21) Application number: **90115083.9**

(22) Date of filing: **06.08.90**

The file contains technical information submitted
after the application was filed and not included in
this specification

(54) **Process for purifying polyether-polyols.**

(30) Priority: **24.08.89 IT 2154789**

(43) Date of publication of application:
**27.03.91 Bulletin 91/13**

(45) Publication of the grant of the patent:
**11.10.95 Bulletin 95/41**

(84) Designated Contracting States:
**BE DE ES FR GB IT NL SE**

(56) References cited:
**EP-A- 0 006 107**
**US-A- 4 029 879**

**CHEMICAL ABSTRACTS, vol. 90, 1979, Co-
lumbus, OH (US); p. 25, no. 7055p**

(73) Proprietor: **PRESSINDUSTRIA S.p.A.**
**Via Porta d'Arnolfo n. 35**
**I-20046 Biassono**
**Milano (IT)**

Proprietor: **STATE COMPANY " VERILA"**
**2129 Ravno Pole**
**Sofia District (BG)**

(72) Inventor: **Penati, Amabile**
**Via Borgazzi 24**
**I-20052 Monza (MI) (IT)**
Inventor: **Moretti, Enrico**
**Via Monte Bianco 22**
**I-20052 Monza (MI) (IT)**
Inventor: **Maffezzoni, Carlo**
**V.1e C. Battisti 4**
**I-20057 Vedano Al Lambra (MI) (IT)**
Inventor: **Agopian, Garbis**
**Via Erovette 24**
**Sofia 1619 (BG)**
Inventor: **Mazdrakov, Boyan Georgiev**
**Via Traicho Kostov 10**
**Sofia - 1000 (BG)**

(74) Representative: **Dr. Ing. A. Racheli & C. S.r.l.**
**Viale San Michele del Carso, 4**
**I-20144 Milano (IT)**

Rank Xerox (UK) Business Services
(3.10/3.09/3.3.3)

## Description

The present invention relates to a process for purifying polyether-polyols, which were obtained by reaction of alkyl oxides and active hydrogen compounds, in the presence of alkaline catalysts.

The purification of such products is necessary in that, after the polyaddition reaction - obtained by means of alkyl oxides addition, with a product having the desired molecular weight being formed - the need arises of removing the catalyst, used in the reaction, down to very low levels of a few ppm, because the presence of such a catalyst causes considerable problems when the reaction product is used, e.g., in polyurethane production.

The incomplete removal of the residual catalyst from the polyaddition reaction is anyway over time responsible for the decay of the polyether-polyol, due to the fact that the poor purity favours reactions with atmospheric oxygen and consequently peroxides and carbonyls are formed, which cause yellowing and the decay of product properties.

A high purity level is particularly important when polyether-polyols which contain alkaline catalyst residues are used for producing flexible polyurethane foams, which are subject to the phenomenon of scorching, with disastrous damages to the product and to the environment.

Therefore the percentage of alkali metals in these products should not exceed a few ppm, whilst the product, soon after the reaction, contains at least 0.1 - 1.0% of alkali metal.

From the above the need of an effective method for purifying the above said products arises.

The prior art known methods to remove the alkaline catalysts are based on several principles:

- Neutralization by means of acids of the alkaline catalyst and filtration of the resulting salts.

 The size of the crystals of these salts is often too small to be easily filtered off.

 Of course, the use of acids favours corrosion. In order to reduce the alkali-metal content down to a few ppm, as required, the pH value of polyol is turned into acidic, and a further neutralization is necessary, possibly followed by a filtration and an addition of an acids adsorbent and a further filtration.

- Extraction with a solvent, which anyway does not yield optimal results.

- Use of ion-exchange resins; in such a case , the exchange is rather slow, many times the resins pollutes the polyether-polyol, and does not remove the alkalies down to the desired extent. Furthermore, the polyol has generally to be diluted in a suitable solvent.

- Use of adsorbents of basic nature. In US-A-4029879 and in JP-A-77/10018, is disclosed the use of basic adsorbents such as magnesium, calcium, aluminum silicates, which are colloidal and require always long process times; therefore they need the use of filtering aids in order to be removed. Romenian patent application 109965 discloses the use of still another basic adsorbent, namely Ca bentonite, that also requires long process times.

- Use of adsorbents for alkalies, which absorbent are of acidic character (such as silicas), do not require a neutralization with acids, but normally have to be used in a very large amount and for long time periods for the adsorption to be complete.

The method according to the present invention is based on the use of a very rapid and efficient alkalinity adsorbent, with no use being made of filtering aids during the filtration.

The purpose of the present invention is therefore to develope a process which is such as to simplify the operations of purification of the polyether-polyols, making them reliable and cheap and such as to make it possible a consistent result to be obtained at the industrial level.

The purpose according to the present invention was achieved by a process for purifying polyether-polyols of the kind providing the treatment of said polyether-polyols with water and an alkalies adsorbent material and their filtration, characterized in that it comprises the following steps:

(a) adding to the polyol, with stirring, under a nitrogen blanketing atmosphere, an amount of water comprised within the range of 0,1 to 10% wt, based on the weight of the polyether-polyol;

(b) adding to the reaction mixture still being kept stirred, and under nitrogen blanketing atmosphere, at least one acidic character or acid treated clay as alkalies adsorbent and alkalies neutralizing agent;

(c) distilling off the water under vacuum and filtering the reaction mixture.

The products to be purified are products of polyaddition of alkyl oxides to an organic compound containing at least one active hydrogen, in the presence of an alkaline catalyst.

Such active hydrogen organic compounds can be monovalent alcohols having different molecular weights and structures, such as methanol, ethanol, butanol, isobutanol, propanol, isopropanol, and so forth; or bivalent alcohols, also having different molecular weights and structures, such as, e.g., ethylene glycol, propylene glycol, 1,4-butanediol, and so forth, up to polyvalent alcohols such as glycerol, sorbitol, sugars, pentaerythritol, trimethylolpropane, and so forth. Products of phenol type can be used as well, with satisfactory results.

The active hydrogen can also come from ammonia and from either aliphatic or aromatic organic amines, such as ethylene-diamine, diethylene-triamine, aniline, toluene-diamine, and still others.

The alkyl oxides to which said compounds are added can be ethylene oxide, propylene oxide, butylene oxide, styrene oxide, and so forth, and their mixtures.

The alkaline catalysts which can be used are, e.g., sodium hydroxide, potassium hydroxide, sodium methoxide, potassium methoxide, sodium carbonate, and so on.

The compounds which are obtained from the herein cited starting products are submitted to the process according to the present invention, so as to be purified.

According to the process of the present invention to the produced polyether-polyol, kept under a nitrogen blanketing atmosphere and with stirring, at a temperature comprised within the range of from 50 to 120°C, an amount of 0.5 - 4 % of water and an amount of from 0,5 to 4 %, on the polyether-polyol weight, of alkalies absorbent are added, with a contact time of at least from 30 to 40 minutes.

Then, according to the process, a dehydration is carried out under vacuum, at a temperature of at least 120-130°C, preferably before filtration. The so obtained polyol is finally filtered, e.g. , on leef filters, vertical automatic discharge filters, etc, directly without the use of any filtering aids.

The alkalies adsorbents which can be used are acidic clays, i.e. clays of acidic character, or treated with acids, in the herein disclosed case, in particular montmorillonite clays treated with inorganic acids, (such as, e.g. Clarfina clay by Caffaro company), and finely ground, were used. The used amount of alkalies adsorbent is of course depending on the amount of the alkaline catalyst used in the synthesis, and is a function of the residual acidity required in the purified product.

For a better understanding of the invention, herein in the following some examples are supplied for merely illustrative purposes, which examples in no way shall be construed as being limitative of the same invention. The method of purification according to the present invention is not reported in the individual examples, in that all said examples share the same purification method, with the only difference that different amounts of the purification products are used in different examples.

In order to better clarify the present invention, in the following some illustrative, non-limitative examples of application are thereof reported.

Example 1 (3,000 K)

334 kg of glycerol and subsequently 69.6 kg of KOH at 48% are charged to the reactor which, in the instant case, is a "Gas Liquid Contactor Pressindustria"; the mixture is dehydrated under vacuum and, after pressurization with nitrogen, 11,900 kg of propylene oxide is gradually added at the constant temperature of 120°C and under a maximal pressure of 5 barG.

After the end of the reaction, the resulting product, which had an NOH = 56.3, was partially used for the tests of purification, neutralization and filtration.

Example 2 (3,500 K)

In the instant case, 273.5 kg of glycerol and then 74 kg of KOH at 48% are charged to the reactor, which is a "Gas Liquid Contactor Pressindustria"; the mixture is dehydrated under vacuum and, after pressurization with nitrogen, a mixture of 10,600 kg of propylene oxide and 1,871 of ethylene oxide is gradually added at a constant temperature of 120°C and under a maximal pressure of 5 barG.

After the end of the reaction, the resulting product, which had a NON = 48.2, was partially used for the tests of purification, neutralization and filtration.

Example 3 (5,000 K)

187.5 kg of glycerol and then 70 kg of KOH at 48 % are charged to the reactor which, in the instant case, is a "Gas Liquid Contactor Pressindustria"; the mixture is dehydrated under vacuum and, after pressurization with nitrogen, an amount of 10,600 kg of propylene oxide is gradually added at the constant temperature of 120° C and under a maximal pressure of 5 barG. Subsequently, 1,890 kg of ethylene oxide is furthermore added.

After the end of the reaction, the resulting product, having an NOH = 36.6, was partially used for the tests of purification, neutralization and filtration.

### Example 4 (PPG 400)

3,360 kg of dipropylene glycol and then 62,5 kg of KOH at 48 % are charged to the reactor which, in the instant case is a "Gas Liquid Contactor Pressindustria"; the mixture is dehydrated under vacuum and after pressurization with nitrogen, an amount of 6,740 kg of propylene oxide is gradually added at the constant temperature of 120° C and a maximal pressure of 5 barG.

After the end of the reaction, the resulting product, having a NOH = 273, was partially used for the tests of purification, neutralization and filtration.

### Example 5 (PPG 1,000)

1,670 kg of dipropylene glycol and then 79 kg of KOH at 48 % are charged to the reactor which, in the instant case, is a "Gas Liquid Contactor Pressinustria"; the mixture is dehydrated under vacuum and, after pressurization with nitrogen, an amount of 11,260 kg of propylene oxide is gradually added at a constant temperature of 120° C and a maximal pressure of 5 barG.

After the end of the reaction, the resulting product, having an NOH = 108, was partially used for the tests of purification, neutralization and filtration.

### Example 6 (PPG 2,000)

615 kg of dipropylene glycol and then 71 kg of KOH at 48 % are charged to the reactor which, in the instant case, is a "Gas Liquid Contactor Pressindustria"; the mixture is dehydrated under vacuum and, after a pressurization with nitrogen, an amount of 11,160 kg of propylene oxide is gradually added at the constant temperature of 120° C and under a maximal pressure of 5 barG.

After the end and the reaction, the resulting product, having a NOH = 56, was partially used for the tests of purification, neutralization and filtration.

The experimental results obtained by means of the application of the purification method according to the instant invention for the purposes of the hereinabove disclosed examples are reported in the following table.

| POLYOL | CLARFINA ADSORBENT, % | H$_2$O | INITIAL ALKALINITY, mg KOH/g | END pH VALUE | ACIDITY, mg KOH/g | ppm K |
|---|---|---|---|---|---|---|
| 3.000 K | 2 | 2 | 2,7 | 7,5 | 0,05 | 6,0 |
| 3.500 K | 2 | 0,5 | 2,9 | 7,8 | 0,03 | 1,0 |
| 3.500 K | 2 | 1 | 2,9 | 7,7 | 0,03 | 2,0 |
| 3.500 K | 2 | 2 | 2,9 | 7,7 | 0,03 | 2,0 |
| 3.500 K | 2 | 4 | 2,9 | 7,3 | 0,04 | 0,5 |
| 5.000 K | 2 | 2 | 3,2 | 7,6 | 0,02 | 6,4 |
| PPG 400 | 2 | 3 | 2,3 | 6,2 | neutral | 7,4 |
| PPG 400 | 3 | 2 | 2,3 | 6,2 | 0,02 | 2,2 |
| PPG 1.000 | 2 | 2 | 2,6 | 7,0 | 0,05 | 2,9 |
| PPG 1.000 | 2 | 4 | 2,6 | 7,6 | neutral | 0,7 |
| PPG 2.000 | 2 | 2 | 2,6 | 7,0 | 0,05 | 2,9 |
| PPG 2.000 | 2 | 4 | 2,6 | 7,6 | neutral | 0,7 |
| PPG 2.000 | 2,5 | 2 | 2,5 | 7,2 | 0,04 | 3,7 |
| PPG 2.000 | 3 | 2 | 2,5 | 7,5 | 0,02 | 4,6 |

The advantage of such a method is that no acids, of any kinds, are added, and therefore no crystals of salts difficult to be filtered off are formed; and that furthermore the industrial facilities are safeguarded from corrosion. Furthermore, the so treated polyether-polyol, even in case an excess of adsorbents is used, retains an always low acidity value. Furthermore, thanks to the nature of acidic clays, the amount of adsorbent to be used is smaller than as used in the processes with non-acidic and non-activated clays, and the polyether-polyol to which said clay is added can be directely filtered without the addition of a filtering aid. These features make possible costs and time to be saved. Besides it should be furthermore pointed out that acidic clay is more easily available than other possible alkalies adsorbents of either natural or synthetic origin, which also implies, as a consequence, an economic advantage.

## Claims

1. A process for neutralizing and purifying polyether-polyols by adding to said polyether-polyols water and an alkalies adsorbent material, and filtering, characterized in that it comprises the following steps:
    a) adding to the polyether-polyol, with stirring and under nitrogen blanketing atmosphere, an amount of water comprised within the range of 0,1 to 10% wt., based on the polyether-polyol weight,
    b) adding to the reaction mixture, still being kept stirred and under a nitrogen blanketing atmosphere, at least one clay having acidic character, or an acid treated clay, as alkalies adsorbent and alkalies neutralizing agent;
    c) distilling off the water under vacuum and filtering the reaction mixture.

2. A process according to claim 1, characterized in that the water is distilled off under vacuum before filtering the mixture.

3. A process according to claims 1 and 2, characterized in that the alkalies adsorbent and neutralizing agent is montmorillonite clay treated with acids.

4. A process according to claim 3, characterized in that said clay is added in an amount within the range from 0,5 to 4,0 % by weight of the polyether-polyol, depending on the amount of the alkalyne catalyst used.

## Patentansprüche

1. Ein Verfahren für die Neutralisierung und die Reinigung von Polyätherpolyolen durch Zugabe von Wasser und einem Alkali Adsorptionsmittel diesen Poliätherpolyolen, und die Filtrierung, dadurch gekennzeichnet, daß es die folgenden Stufen einbegrifft:
    a) Zusatz dein Polyätherpolyol, mit Rührung und unter Stickstoff Schutzatmosphäre, einer Wassermenge in dem Interval von 0,1 bis 10 Gew. % bezogen auf das Polyätherpolyol Gewicht,
    b) Zusatz der Reaktionsmischung, immer mit Rührung und unter einer Stückstoff Schutzatmosphäre gehalten, von am mindestens einen, Ton mit sauerem Merkmal, oder einen, mit Säuren behandelten Ton, als Alkali Adsorptionsmittel und Alkali Neutralisierungsmittel,
    c) Entfernung von Wasser durch Vakuumdestillation und Filtrierung des Reaktionsgemisches.

2. Ein Verfahren nach Anspruch 1, dadurch gekennzeichnet, daß Wasser durch Vakuumdestillation vor der Filtrierung des Gemisches entfernt ist.

3. Ein Verfahren nach Ansprüchen 1 und 2, dadurch gekennzeichnet, daß das Alkali Adsorptionsmittel und Alkali Neutralisierungsmittel Montmorillonit Ton mit Säuren behandelter ist.

4. Ein Verfahren nach Anspruch 3, dadurch gekennzeichnet, daß dieser Ton in einer Menge im Interval von 0,5 bis 4,0 Gew. % des Polyätherpolyols, abhängig von der Menge des eingesetzten alkalischen Katalysators, zugegeben wird.

## Revendications

1. Un procédé pour la neutralisation et la purification de poliétherpolyols en ajoutant aux poliétherpolyols de l'eau et du matériel adsorbant des alcalis, et la filtration, caractérisé en ce que le même comprend les étapes suivantes:
    a) addition au poliétherpolyol, avec agitation et sous atmosphère de protection d'azote, d'une quantité d'eau comprise dans l'intervalle de 0,1 jusqu'à 10% en poids, par rapport au poids du poliétherpolyol,
    b) addition au mélange réactionnel, toujours avec agitation et sous une atmosphère de protection d'azote, au moins d'une argile ayant caractère acide, ou une argile traitée avec acide, comme adsorbant des alcalis et agent de neutralisation des alcalis,
c) élimination de l'eau par distillation sous vide et filtration du mélange réactionnel.

2. Un procédé selon la revendication 1, caractérisé en ce que l'eau est éliminée par distillation sous vide, avant la filtration du mélange.

3. Un procédé selon les revendications 1 et 2, caractérisé en ce que l'agent adsorbant des alcalis et de neutralisation est argile montmorillonite traitée avec des acides.

4. Un procédé selon la revendication 3, caractérisé en ce que cette argile est ajoutée en quantité comprise dans l'intervalle de 0,5 jusqu'à 4, 0% en poids du poliétherpolyol, selon le catalyseur alcalin utilisé.